# EUROPEAN PATENT APPLICATION

(11) **EP 4 141 768 A1**
(43) Date of publication of application: **01.03.2023**
(21) Application number: 21193421.1
(22) Date of filing: 27.08.2021
(51) Int. Cl.: G06Q 20/02, G06Q 20/06, G06Q 20/38, G06Q 20/40

(54) **METHOD AND SYSTEM FOR A CENTRAL BANK DIGITAL CURRENCY WITH UNLINKABLE TRANSACTIONS AND PRIVACY PRESERVING REGULATION**

(71) Applicant: ETH Zurich, 8092 Zurich (CH)
(72) Inventor: CAPKUN, Srdjan, 8049 Zürich (CH); KOSTIAINEN, Kari, 8053 Zürich (CH); WÜST, Karl, 8008 Zürich (CH)

(57) **Abstract**

The present invention relates to a digital transaction between a sender (S) and a recipient (R), wherein the digital transaction is certified by a central bank (B), while preserving the privacy of the transaction (T). In particular the transaction (T) is based on a first sender serial number (SSNi) and a first receiver serial number, both signed by the central bank (B) and dedicated to the transaction. The transaction is in addition based on commitment to a value, which is encrypted with a blind factor (BTx) and involves sender zero-knowledge proof (zKs) and receiver zero-knowledge proof (zKr) so that the central bank (B) has no knowledge of the value of the transaction neither of the identity of the sender and the receiver. The present invention also relates to a system and to a digital currency allowing such a digital transaction.

## Description

### Technical domain

The present invention concerns digital currencies and digital transactions. It relates in particular to centralised currencies offering a high level of privacy while still certifying the transaction by a central bank. It further relates to a method of payment by means of a digital currency, and a system adapted to the digital transactions.

### Related art

Several digital currency systems have been developed and deployed over the recent years. Bitcoin is one of the most famous examples of such a digital currency. A large number of such currencies are based on a concept of decentralized blockchains. Such systems provide strong integrity for payment transactions. While Bitcoin offers only a weak notion of privacy, called pseudonymity, other solutions like Zcash provide additional measures to protect the privacy of transactions as well. In all such systems, transactions are processed and approved by a decentralized process that involves thousands of miners whose identity is unknown. In particular, such transactions are not certified by a central bank, and thus such solutions are not easily applicable as legal tender. In addition, such digital currencies are difficult to regulate, as authorities cannot easily track payments which complicates compliance to legislation such as anti-money-laundering rules. Moreover, such digital currencies based on the blockchain technology do not easily scale for high transaction throughput.

An alternative style of digital currency, called E-cash, on the contrary, is better suited as legal tender, because in such a system all transactions are processed and approved by a reputable authority such as a central bank. Due to the same reason, such digital currencies are easier to regulate as well. However, such digital currency provide only limited form of privacy. In particular, the value of the transaction and the identity of the recipient is revealed to the central authority during payment processing.

The existing digital currency solutions do not provide the same advantages as traditional cash money, wherein the money is certified by a central bank, wherein the amount of the transaction as well as the identity of the payer and the receiver remain both hidden from authorities, and wherein the system can scale to handle high transaction loads. There is thus a need for a digital currency and/or digital transaction means that allow both confidence in the transaction and good privacy, like the traditional cash money. There is also a need to provide a digital currency and/or digital transaction means which allows the implementation of the regulation, while still offering a good privacy. There is also a need for a solution that scales for high transaction loads in large deployments.

### Short disclosure of the invention

An aim of the present invention is the provision of a digital transaction that overcomes the shortcomings and limitations of the state of the art. In particular, the digital transaction according to the present disclosure aims at providing confidence to the transaction while preserving the privacy. A further aim is to provide a digital transaction allowing to implement regulation rules while preserving the privacy. A further aim of the present invention is to allow back ups of the transaction while preserving privacy. A further aim of the present invention is to provide a highly scalable and inter-operably transaction allowing confidence as well as privacy.

Another aim of the invention is the provision of a system adapted to a digital transaction as here described.

A further aim of the present invention is the creation and/or usage of a digital currency adapted for the digital transaction as here described.

According to the invention, these aims are attained by the object of the independent claims, further detailed by the dependent claims.

For the purpose of the present description the term *"digital currency"* denotes any digital entity or digital means related to a monetary value and involved in a monetary transaction. It includes the cryptocurrencies and any digital monetary value which can be exchanged between a sender and a receiver. The term "digital" is here understood as dematerialized or virtual, meaning that it can be stored in a database and shared, transferred, visualized and managed by means of computer means. This excludes for example any physical objects such as coins and banknotes.

The terms *"digital transaction"* denotes any monetary transaction between a sender and a receiver based on, or including, a digital currency. The digital transaction reflects at least a monetary value that the sender provides to a receiver. Unless otherwise specified the term "transaction" used in the present description refers to a digital transaction.

The terms *"central bank"* denotes any official entity which produces, manages and/or controls the integrity of the digital currency and the digital transactions between a sender and a receiver based on such a digital currency. It can be a traditional bank as well as any other institute or company or assembly directly or indirectly linked to one or both of the sender and the receiver. The central bank is preferably an officially authorized entity, entrusted or certified by a controller, and potentially engaged to apply regulations related to finances, monetary system, and/or economy laws. Such a controller can be a government or a government related entity and/or an international financial entity.

The term "user" indistinctly denotes both a sender and a receiver. the users may correspond to the clients of a central bank, who are involved in the digital transactions. This however excludes the central bank itself.

The term *"sender"* denotes any physical or legal person providing to a receiver a monetary value based on a digital currency through a digital transaction.

The term *"receiver"* denotes any physical or legal person receiving from a sender a monetary value based on a digital currency through a digital transaction.

The term *"zero-knowledge proof"* denotes any digital means or method allowing to demonstrate to a third party that one knows a given information without disclosing such information or any related information. The zero-knowledge proof can be based on a secret information that only one or both of the two parties of a given transaction know or can access to.

With respect to what is known in the art, the invention provides the advantage that a digital transaction between a sender and a receiver can be performed with high confidence, while the value of the transaction remains unlikable to any previous and future transactions and wherein the identity of both the sender and the receiver is not known from the bank.

### Examples of embodiments of the present invention

A digital transaction **T** according to the present invention relates to any monetary transaction between a sender **S** and a receiver **R.** The digital transaction according to the present description necessitates that an account state is created for the sender **S.** In particular, a first sender account state **ASi** is created for the sender **S** at the beginning of the digital transaction. The first sender account state **ASi** is signed by the central bank **B** by means of a central bank secret key **sK.** The first sender account states **ASi** may derive from a previous transaction allowed by the central bank **B.** It is here mentioned that the central bank **B** has no knowledge about the value of the previous transaction and the identities of the sender **S** and the receiver **R** of this previous transaction. It is however in a position to certify the first sender account state **ASi.** Alternatively, the first sender account states **ASi** may derive from a creation of a new sender account and a corresponding deposit, and signed by the central bank **B.** The first sender account state ASi consists of a cryptographic commitment to at least a first sender serial number SSNi and a first sender account balance SBi. This first sender serial number **SSNi** is randomly generated or pseudo-randomly generated so that it does not reveal any information related to the identity of the sender **S** and the value **VTx** of the transaction **T.** In particular, the first sender serial number **SSNi** may be created by the sender **S** using his longterm key. The first sender account state **ASi** is used for the purpose of a given transaction **T** and is consumed after the transaction **T** has been validated or acknowledged. It results that the corresponding first sender serial number **SSNi** can be used only once and that it is specific of a given transaction **T.**

The sender **S** creates a sender commitment **CTs** based on the value **VTx** of the transaction **T.** While the value **VTx** corresponds to the effective amount of the transaction T, the commitment **CTs** to the value **VTx** uses a blinding factor **BTx** so that the commitment **CTs** does not reveal any indication on the value **VTx** without knowing the blinding factor **BTx.** The blinding factor **BTx** will be necessary for the receiver **R** to complete the transaction **T,** but is not known by the central bank **B.** In consequence, the central bank **B** cannot have knowledge of the value **VTx,** since the blinding factor **BTx** is never transmitted to it. Once the sender **S** has created the sender commitment **CTs,** he creates a second sender account state **ASi⁺¹** which reflects the debit of the value **VTx** from his account. The second sender account state **ASi⁺¹** consists of a cryptographic commitment to at least a second sender serial number **SSNi⁺¹** and a second sender account balance SBi⁺¹, which is randomly or pseudo-randomly generated.

The sender **S** also creates a sender zero-knowledge proof **ZKs,** which establishes that the balance of the second sender account state **ASi⁺¹** corresponds to the balance of the first sender account state **ASi** minus the transaction value **VTx.** The sender zero-knowledge proof **ZKs** further certifies that the first sender account state ASi actually belongs to the sender **S.** The sender zero-knowledge proof **ZKs** is based on at least the sender commitment **CTs,** the first sender serial number **SSNi** and the second sender serial number **SSNi⁺¹.** It however does not provide any direct information on the value **VTx** of the transaction **T.** It further does not provide direct information on the identity or account balance of the sender S. The sender zero-knowledge proof **ZKs** may comprise or demonstrate additional information according to the needs. For example, the sender zero-knowledge proof **ZKs** may prove compliance with one or several points of regulation if applicable or required.

The Zero-knowledge proof **ZKs** comprises some secrete values and some public values. According to an embodiment, the public values on which the proof is based are selected at least among the first sender serial number **SSNi,** the commitment **CT,** and the second sender account state **ASi⁺¹.** The secret values on which the proof is based are selected at least among the second sender serial number **SSNi⁺¹,** the first sender account state **ASi** (including signature of central bank), the transaction value **VTx,** the blinding factor **BTx,** the first sender account balance **SBi,** and the second sender account balance **SBi⁺¹.** According to a preferred embodiment, the Zero-knowledge proof **ZKs** is based at least on the public values selected among the first sender serial number **SSNi,** the commitment **CT,** and the second sender account state **ASi⁺¹,** and the secret values selected among the second sender serial number **SSNi⁺¹,** the first sender account state **ASi** (including signature of central bank), the transaction value **VTx,** the blinding factor **BTx,** the first sender account balance **SBi,** and the second sender account balance **SBi⁺¹.**

The sender **S** sends to the receiver **R** the sender zero-knowledge proof **ZKs,** the sender commitment **CTs,** the first sender serial number **SSNi** and the second sender account state **ASi⁺¹.** The sender **S** also provides the receiver **R** with the blinding factor **BTx,** which is required to open the sender commitment **CTs.** The blinding factor **BTx** is in addition used by the receiver **R** to create a receiver zero-knowledge proof **zKr.**

The receiver **R** should own a first receiver account state **ARi.** The first receiver account state **ARi** may derive from a previous transaction and be signed by the central bank **B** by means of a central bank secret key **sK.** The first receiver account state **ARi** consists of a cryptographic commitment to at least a first receiver serial number **RSNi** and a first receiver account balance **RBi.** In case the receiver **R** has not already been involved in a digital transaction, he does not have a first receiver serial number **RSNi.** He can create a new receiver account state **RSN0** corresponding to a balance of 0 and then getting it certified by the central bank. Then we could use **RSN0** as equivalent to **RSNi.** This may be done at the beginning of the transaction or later during the transaction. Preliminary interaction between the receiver **R** and the central bank **B** may be requested, at least to establish the identity of the receiver **R,** before creating a new receiver account state **RSN0.**

The receiver R creates a receiver commitment CTr based on the value VTx of the transaction T. Contrary to the sender commitment CTs wherein the value VTx is debited from the sender's account, the receiver commitment **CTr** establishes that the same value **VTx** is credited to the receiver's account. The receiver commitment **CTr** uses the same blinding factor **BTx** than already used by the sender **S** to create the sender commitment **CTs.**

It is understood that the receiver commitment **CTr** and the sender commitment **CTs,** both correspond to the absolute value **VTx** of the transaction **T.** Thus, both the receiver commitment **CTr** and the sender commitment **CTs** can be here considered as the transaction commitment **CT.**

The receiver **R** creates a second receiver account state **ARi⁺¹** which reflects the credit of the value **VTx** to his account. The second receiver account state **ARi⁺¹** is defined or related to a second receiver serial number **RSNi⁺¹,** which is randomly or pseudo-randomly generated.

The receiver **R** also creates a receiver zero-knowledge proof **ZKr,** which establishes that the balance of the second receiver account state **ARi⁺¹** corresponds to the balance of the first receiver account state **ARi** plus the transaction value **VTx.** In case no previous account state is known, the receiver zero-knowledge proof **ZKr** can establish that the balance of the second receiver account state **ARi⁺¹** corresponds to the value **VTx** of the transaction **T.** The receiver zero-knowledge proof **ZKr** may further certify that one or both of the first receiver account state **ARi** and the second receiver account state **ARi⁺¹** actually belongs to the receiver **R.** The receiver zero-knowledge proof **ZKr** is based on at least the receiver commitment **CTr,** the first receiver serial number **RSNi** and the second receiver serial number **RSNi⁺¹.** It however does not provide any direct information on the value **VTx** of the transaction **T.** It further does not provide direct information on the identity or account balance of the receiver **R.** The receiver zero-knowledge proof **ZKr** may comprise or demonstrate additional information according to the needs. For example, the receiver zero-knowledge proof **ZKr** may prove compliance with one or several points of regulation if applicable or required.

The Zero-knowledge proof **ZKr** comprises some secrete values and some public values. According to an embodiment, the public values on which the proof is based are selected at least among the first receiver serial number **RSNi,** the transaction commitment **CT,** and the second receiver account state **ARi⁺¹.** The secret values on which the proof is based are selected at least among the second receiver serial number **RSNi⁺¹,** the first receiver account state **ARi** (including signature of central bank), the transaction value **VTx,** the blinding factor **BTx,** the first receiver account balance **RBi,** and the second receiver account balance **RBi⁺¹.** According to a preferred embodiment, the Zero-knowledge proof **ZKr** is based at least on the public values selected among the first receiver serial number **RSNi,** the transaction commitment **CT,** and the second receiver account state **ARi⁺¹** and the secret values selected among the second receiver serial number **RSNi⁺¹,** the first receiver account state **ARi** (including signature of central bank), the transaction value **VTx,** the blinding factor **BTx,** the first receiver account balance **RBi,** and the second receiver account balance **RBi⁺¹.**

According to an embodiment, receiver zero-knowledge proof **ZKr** is created based on the blinding factor **BTx** provided by the sender **S.** It is thus noted that the blinging factor **BTx** is used for both the sender commitments **CTs** and the receiver commitment **CTr,** and for both the sender zero-knowledge proof **ZKs** and the receiver zero-knowledge proof **ZKr.**

The receiver **R** sends to the central bank **B** at least the receiver zero-knowledge proof **ZKr,** the sender zero-knowledge proof **ZKs** and the first sender serial number **SSNi.** The receiver further sends to the central bank the first receiver serial number **RSNi,** the transaction commitment **CT,** the second sender account state **ASi⁺¹** and the second receiver account state **ARi⁺¹.** The central bank **B** checks the correctness of both receiver zero-knowledge proof **ZKr** and sender zero-knowledge proof **ZKs.** The central bank **B** further verifies at least that none of the first sender serial number SSNi and the first receiver serial number **RSNi** has been already used in a transaction.

If both receiver zero-knowledge proof **ZKr** and sender zero-knowledge proof **ZKs** are judged correct by the central bank **B** and if none of the first sender serial number **SSNi** and the first receiver serial number **RSNi** has been already used in a transaction, the central bank B signs the second sender account state **ASi⁺¹** and the second receiver account state **ARi⁺¹** using a central bank secret key **sK.** The signed second sender account state **ASi⁺¹** and the signed second receiver account state **ARi⁺¹** are transmitted to the receiver **R** by the central bank **B.** The receiver **R** then forwards to the sender **S** the signed second sender account state **ASi⁺¹** to complete the transaction **T.**

In case the receiver **R** does not forward to the sender **S** the signed second sender account state **ASi⁺¹,** the central bank **B** may also do it. Alternatively or in addition, the sender may also retrieve it from the central bank.

In such a transaction, none of the values sent to the central bank **B** by the receiver **R** allows the central bank **B** to know the value **VTx** of the transaction **T.** In addition none of the identities of the sender **S** and the receiver **R** is known from the central bank **B.**

The central bank **B** may record the transactions for a predetermined period and publish them in a publicly accessible log so that each party can consult his own passed transactions.

The central bank **B** creates at least a central bank secret key **sk,** used at least to certify the account states of its clients. The central bank in addition creates one or several public keys **pk** allowing its clients to verify the certification of their own account states.

A user, such as a sender **S** and a receiver **R,** may create a corresponding user secret key **uKs** for the sender **S and uKr** for the receiver **R,** which can be used to generate serial numbers and blinding factors **BTx.** The serial number may be generated in a pseudorandomly manner, based for example on one or several pseudorandom functions **FK.** Such an arrangement simplifies the creation of backups for a given account. This also prevents possible attacks that could destroy funds. In addition, the user secret keys **uKs** belonging to the sender **S** and the user secret key **uKr** belonging to the receiver **R** may be related to the respective identity of the sender **S** and the receiver **R.** According to an embodiment, the user secret key corresponds to the secret identity of the corresponding user. Alternatively, the user secret key is used to generate a random secret value corresponding to the secret identity of the corresponding user. Under such conditions, the identity of the user remains secret to the central bank **B** and to third parties who do not possess the necessary keys. According to another embodiment, each of the users or part of them, may generate a pair of private and public user keys allowing to reveal the related user identity in case of need. The public identity of a user may be included in the account state of a user so that an identity cannot be used for multiple accounts or for non-authorized transactions.

It is noted that the transaction **T** as above described remains centralized, at least partly, since the central bank **B** checks information coming from both the sender **S** and the receiver **R.** It is further clear that based on the information provided by both the sender **S** and the receiver **R,** the central bank **B** as no direct access to the amount of the transaction **T** neither to the identity of the sender and the receiver. In addition, standard sharding techniques may be used for an improved scalability. For example, the step of verifying that both receiver zero-knowledge proof **ZKr** and sender zero-knowledge proof **ZKs** are correct can be distinct from the step of checking that none of the first sender serial number **SSNi** and the first receiver serial number **RSNi** has been already used in a transaction. While they can be concomitant, these two steps can involve separate databases, protocols and/or servers. The central bank **B** can shard one or both of the computation and storage of serial numbers. For example, one or more of the first and second serial numbers of the sender **S** and the receiver **R** can be object of distinct subset each stored in different databases.

Several databases shards can be used, such as 2, 4 or more database shards. Each of the database shards may be assigned a fraction of all possible serial numbers based on a predetermined number of representative bits of the serial numbers of the senders **S** and/or the receiver **R.** In a transaction the sender **S** and the receiver **R** can each connect to any compute node of the bank **B.** The compute node to which is connected the sender **S,** respectively the receiver **R,** verifies the corresponding zero-knowledge proofs. If they are correct, the step of verifying that none of the serial numbers has been already used is initiated. To check the first **SSNi** and second **SSNi⁺¹** sender serial numbers and first **RSNi** and second **RSNi⁺¹** receiver serial numbers in the in database shards, the compute node acts as a coordinator in two-phase commit protocol.

Preferably, the first **SSNi** and second **SSNi⁺¹** sender serial numbers and first **RSNi** and second **RSNi⁺¹** receiver serial numbers are pseudorandom. There is in this case at least two databases shards. Since the transaction **T** is based on an account, a transaction **T** requires only 2 databases shards, one being used for checking the first sender serial number **SSNi** and another one for checking the first receiver serial number **RSNi.** In case one of the shards finds that the corresponding serial number exists, the coordinator aborts both shards. Otherwise, the computer node signs both account states of the senders **S** and the receiver **R,** forwards the signed account states to the client and publishes the transaction on the public transaction log, as above-described. The transaction log does not requires ordering and can be done concurrently by separate compute nodes, without requiring any consensus protocol between them.

It is highlighted that only the receiver **R** is in direct contact with the central bank **B.** The sender **S** does not communicate any information to the central bank **B** for a given transaction **T.** The anonymity of the sender **S** is thus guaranteed.

In an embodiment, the transaction **T** may not require any regulation constraint. These means for example that any value **VTx** related to a transaction **T** may be authorized.

Alternatively, a given transaction **T** may be subjected to limitations. For example, a limited amount of value **VTx** may be authorized for a transaction **T.** Alternatively or in addition, a maximum balance **Bmax** may be authorized on a given account so as to limit the total amount of money on a given account. The regulations involved in a transaction **T** may be used to enforce the anti-money-laundering legislation or to limit bank runs, or to prevent evasion of wealth tax, and/or ensure the financial stability. To this end, the account states of some or all the users, such as the sender **S** and/or the receiver **R** may comprise additional information than only the value **VTx** of a given transaction **T.**

The public identity of the sender **S** and/or the receiver **R** may be encrypted and attached to the related sender zero-knowledge proof **ZKs** and receiver zero-knowledge proof **ZKr.** Such encryption may be based on the related user secret key **uKs, uKr** or on the related pair of secret and public keys. Such an arrangement allows to certify that the identity of the sender **S** and the receiver **R** is correct without explicitly revealing their identity. This further allows to verify that the sender (S) and/or the receiver (R) are origin of the transaction.

Alternatively or in addition, in case some regulation rules apply to a given transaction T, the related sender zero-knowledge proof **ZKs** or the related receiver zero-knowledge proof **ZKr** or both may comprise the corresponding encrypted information. For example, some regulation rules may define that above a predetermined value **VTx** of the transaction **T,** the identity of one or both of the sender S and the receiver **R** should be revealed. Other limitations may be associated to the transaction **T.** By this way, although no third parties knows about such regulation limitations, the corresponding zero-knowledge proof allows to certify that the transaction complies with the applicable regulation and allows to validate the transaction **T.** The applicable regulation rules may vary from one user to the other. The related user key **uK** and/or zero-knowledge proof is thus specifically defined with the specificities of the users. For example, specific regulation rules may apply to a company account compared to an individual account.

The regulator **Z** may be part of a given transaction **T** in case some regulation rules should be satisfied. The regulator **Z** may be the central bank **B** or another entity or organism. The regulator **Z** may create a secret regulator key **sKz** allowing to encrypt regulation based information and attach it to a user zero-knowledge proof. The regulator **Z** may also create pairs of secret and public keys so that the users can access the regulation rules applying on their own transactions. By this way, the sender zero-knowledge proof **ZKs** or the receiver zero-knowledge proof **ZKr** or both are used to certify that the transaction **T** complies with the applicable regulation rules while keeping these regulation rules confidential to one or several of the central bank **B** the regulator **Z** and to the other party of the transaction **T.** In case the central bank **B** applies itself some regulation rules, playing the role of a regulator **Z,** the information related to the regulation rules, using a secret regulator key **sKz,** and the information related to the central bank **B** using a central bank secret key **sK** may not be accessible by the same person or the same services, and/or may not be stored in the same databases, and/or may follow distinct protocols and encryption processes.

It is established that, without specific indication, the central bank **B** has no knowledge of the value **VTx** of the transaction **T,** neither of the identity of the sender **S.** The central bank has also no knowledge of the receiver **R.** The central bank **B** is therefore not able to blacklist some of the users based on the related transactions **T.** In case some regulation rules are included in the transaction **T,** the regulator **Z** has no knowledge of the details of the transactions, such as the value **VTx** and the identity of the participating users, and only gains guarantee that the transaction complies with the implemented regulation rules. Thanks to the pair of regulator public and private keys, one or more of the identity and the value **VTx** of the transaction **T** may be open to the knowledge of the regulator **Z** under predetermined specific conditions. Similarly, one or more of the identity and the value **VTx** of the transaction **T** may be open to the knowledge of the central bank **B** under predetermined conditions.

The transaction **T,** as above-described is unlikable to previous or future transactions, at least because of the pseudorendom generation of the serial numbers of the parties of the transaction **T.** In addition, the transaction **T** above-described does not involve a predetermined unit value, such as a coin. In consequence, the transaction size remains independent from the value **VTx** of the transaction **T.** This also improves the privacy since no predetermined unit value needs to be deposited to the central bank **B** by the receiver **R.** Furthermore, the above-described transaction T allow interoperability, for example allowing payment across borders.

The present description also comprises a system adapted for a digital transaction, wherein both the privacy and the confidence in the transaction are guaranteed. In particular, the system according to the present invention comprises a central bank **B,** at least one sender **S** and at least one receiver **R,** wherein only one of the sender **S** and the receiver **R** is in direct connection with the central bank **B** for validating the transaction **T.** Preferably, only the receiver **R** is in direct connection with the central bank **B** for validating the transaction **T.** The digital transaction **T** occurs as above-described. More particularly both privacy and confidence are provided by means of a zero-knowledge proof allowing to certify at least the amount of the transaction and that the sender **S** and the receiver **R** correspond to pre-identified users, wherein none of the value **VTx** and the identity of the sender **S** and of the receiver **R** are known from the central bank **B.**

The system according to the present invention may further comprise a regulator **Z,** which provides to a given digital transaction **T,** one or several regulation limitations and controls, as above-mentioned.

The present disclosure also refers to a digital currency involved in a digital transaction **T** as above-described. It is in particular an advantage that different digital currencies may be used according to the principle above-described.

In the present disclosure, the signatures, the commitments, the zero-knowledge proofs and any other encryption techniques are not limited. For example, one or both of the sender zero-knowledge proof and the receiver zero-knowledge proof **ZKr** may be based on Non-interactive zero-knowledge proof or Zero-Knowledge Succinct Non-Interactive Argument of Knowledge, also known as zk-SNARK. Different approaches and techniques can however be applied.

The signatures and the commitments used on the present invention may be based on Schnorr Signatures or variants thereof, such as the Edwards-curve Digital Signature Algorithm, also designated by EdDSA, and/or on cryptographic hash functions. Alternatively, the transaction **T** involves the Pederson commitment over elliptic curves for all commitments and randomizable signatures for the signatures that the central bank **B** issue on the account states commitments. Such randomizable signatures can use for example bilinear maps. This allows the efficient blinding and unblinging of the signatures on committed values by the parties, proving that they have a signature of some value without revealing the value. Other suitable algorithms and protocol may be used. Different approaches and techniques can however be applied.

The public keys may be encrypted using Elgamal encryption system. Other suitable encryption system may be used.

## Claims

1. A digital transaction between a sender (S) and a recipient (R), wherein the digital transaction is certified by a central bank (B), wherein :
a) a first account state (ASi) is used for the sender (S); the first account state being related to a dedicated first sender serial number (SSNi) and signed by the central bank (B) by means of a secret key (sK);
b) the sender (S) agrees on a commitment (CTs) to a value (VTx) of the transaction, said commitment to the value (VTx) comprising a random factor blind (BTx) so that the value (VTx) remains unknown from parties not in possession of the random factor blind (BTx);
c) a second account state (ASi⁺¹) is used for the sender (S) based on the first sender account state (ASi) and differing from the first sender account state (ASi) by the value (VTx), the second account state being related to a dedicated second sender serial number (SSNi⁺¹);
d) the sender (S) creates a sender zero-knowledge proof (zKs), which certifies at least that the second sender account state (ASi⁺¹) corresponds to the first sender account state (ASi) minus the value (VTx) and that the first sender account state (ASi) belongs to the sender (S);
e) the sender (S) sends to the receiver (R) the commitment (CTs) to said value (VTx) and the corresponding random factor blind (BTx), the first sender serial number (SSNi) and the sender zero-knowledge proof (zKs).
f) a second receiver account state (ARi⁺¹) is used for the receiver (R), which is related to a dedicated second receiver serial number (RSNi⁺¹);
g) the receiver (R) creates a receiver zero-knowledge proof (zKr) which certifies at least that the transaction corresponds to the value (VTx), said receiver zero-knowledge proof (zKr) being created based on the random factor blind (BTx);
h) the receiver (R) sends to the central bank (B) at least the receiver zero-knowledge proof (zKr), the sender zero-knowledge proof (zKs), and the first sender serial number (SSNi);
i) the central bank (B) checks the correctness of both receiver zero-knowledge proof (zKr) and sender zero-knowledge proof (zKs);
j) the central bank verifies at least that none of the first sender serial number (SSNi) and the first receiver serial number (RSNi) has been already used in a transaction;
k) if both receiver zero-knowledge proof (zKr) and sender zero-knowledge proof (zKs) are correct and if none of the first sender serial number (SSNi) and the first receiver serial number (RSNi) has been already used in a transaction, the central bank (B) signs the second sender account state (ASi⁺¹) and the second receiver account state (ARi⁺¹) using a secret key (sK);
**characterized in that** none of the receiver zero-knowledge proof (zKr), the sender zero-knowledge proof (zKs), the first sender serial number (SSNi), and the first receiver serial number (RSNi) sent to the central bank (B) by the receiver (R) allows the central bank (B) to know the value (VTx) and the identities of the sender (S) and the receiver (R).

2. Digital transaction according to claim 1, wherein said second receiver account state (ARi⁺¹) derives from a previous transaction signed by the central bank (B) or from a valid certificate.

3. Digital transaction according to one of claims 1 and 2, wherein :
- the steps i) of checking the correctness of both receiver zero-knowledge proof (zKr) and sender zero-knowledge proof (zKs) and
- the step j) of verifying that none of the first sender serial number (SSNi) and the first receiver serial number (RSNi) has been already used in a transaction,
involved separate databases, protocols and/or servers.

4. Digital transaction according to one of claims 1 to 3, wherein at least one of said first sender serial number (SSNi) and second sender serial number (SSNi⁺¹) is created on a pseudorandom manner, based on a user secret key (uKs) belonging to the sender (S), and wherein at least one of said first receiver serial number (RSNi) and second receiver serial number (RSNi⁺¹) is created on a pseudorandom manner, based on a user secret key (uKr) belonging to the sender (R);

5. Digital transaction according to one of claims 1 to 5, wherein said sender zero-knowledge proof (zKs) comprises the encrypted public identity of the sender (S) and wherein the receiver zero-knowledge proof (zKr) comprises the encrypted public identity of the receiver (R) so as to certify that both the sender (S) and the receiver (R) are the correct persons without revealing their identity and/or that the transaction originated from one or both of the sender (S) and the receiver (R).

6. Digital transaction according to one of claims 1 to 5, wherein at least one of the sender zero-knowledge proof (zKs) and the receiver zero-knowledge proof (zKr) comprises encrypted information related to compliance to some regulation rules.

7. Digital transaction according to claim 6, wherein said regulation rules comprise or relates to revealing the identity of one or both of the sender (S) and the receiver (R) if the value (VTx) is above a predetermined amount, preventing evasion of wealth tax, allow a maximum balance (Bmax) on a given account, enforce anti-money-laundering legislation, and limit or avoid bank runs.

8. Digital transaction according to one of claims 1 to 7, wherein said sender (S) and said receiver (R) both generate a pair of private and public keys so as to access public log related to their own transactions.

9. A system adapted for performing a digital transaction (T) as defined through one of claims 1 to 8, the digital system comprising a central bank (B), at least one sender (S) and at least one receiver (R), wherein only one of the sender (S) and the receiver (R) is in direct contact with the central bank for validating said transaction (T), wherein the central bank (B) generates a pair of private and public keys, and wherein both the at least one sender (S) and the at least one receiver (R) generate a respective pair of private and public keys, so that the central bank (B) can sign and certify serial numbers related to the account states of both sender (S) and receiver (R) without knowing their identity neither the value (VTx) of the transaction (T).

10. System according to claim 9, further comprising a regulator (Z), said regulator being adapted to generate a pair of private and public keys related to at least one regulation rule.

11. A digital currency adapted for the digital transaction (T) according to one of claims 1 to 8, wherein said digital currency has no predetermined unit value so that the size of the digital transaction remains independent of the value of the transaction (T), said digital currency being certified by a central bank (B).
